# EUROPEAN PATENT APPLICATION

(11) **EP 3 244 587 A1**
(43) Date of publication of application: **15.11.2017**
(21) Application number: 15876588.3
(22) Date of filing: 21.07.2015
(51) Int. Cl.: H04L 29/06

(54) **METHOD, DEVICE AND SYSTEM FOR PRECISION TIME PROTOCOL TIME SYNCHRONIZATION IN AGGREGATION NETWORK**

(30) Priority: 06.01.2015 CN 201510005271
(71) Applicant: ZTE Corporation, Shenzhen, Guangdong 518057 (CN)
(72) Inventor: ZHAO, Hongguang, Shenzhen Guangdong 518057 (CN); QU, Yanxia, Shenzhen Guangdong 518057 (CN)
(74) Representative: Potter Clarkson LLP
(86) International application number: PCT/CN2015/084706
(87) International publication number: WO 2016/110084

(57) **Abstract**

A method, device and system for precision time protocol time synchronization in an aggregation network relate to a mobile communication field and solve the problem of a conflict between a PTP protocol and an LACP protocol. The method comprises: receiving a master port negotiation message of the Precision Time Protocol (PTP) transmitted by a communication opposite end device, and recording the port receiving the PTP master port negotiation message; according to a same determination rule preset locally and in the communication opposite end device, choosing one port from a port corresponding to a local master line and the port receiving the PTP master port negotiation message as a subsequent PTP master physical link port; and performing PTP time synchronization by means of the PTP master physical link port. The technical solution provided by an embodiment of the present invention is applicable to a communication network, and solves the problem of the collision between the PTP protocol and the LACP protocol.

## Description

### TECHNICAL FIELD

The present application relates to, but is not limited to, the field of mobile communications, and more particularly, to a time synchronization method, apparatus, and system for precision time protocol (PTP) in an aggregation network.

### BACKGROUND

With the rapid development of 3G network, a PTP time synchronization protocol gets more and more attention and has wide applications in the communication network. Domestic and foreign operators continue to use the PTP for time synchronization, and the PTP gradually replaces the use of GPS for time synchronization.

In the IEEE 1588 V2 protocol, time calculations are derived based on a single link, that limits that the network deployed under the IEEE 1588 V2 protocol can only be the network composed of a single link. However, in order to increase the link transmission capacity, operators usually adopt multiple links for sharing service. At this time, the link aggregation control protocol (LACP) is used. The lines on which the message is transmitted and received in one section of the aggregation link designed in accordance with the LACP protocol are not necessarily limited to one interface, which results in conflict between the PTP protocol and the LACP protocol.

### SUMMARY

The following is an overview of the topics that are described in detail in this disclosure. This summary is not intended to limit the protection scope of the claims.

The present invention provides a PTP time synchronization method, apparatus and system in an aggregation network for solving the problem of conflict between the PTP and the LACP.

A PTP time synchronization method in an aggregation network, includes:
receiving a PTP main port negotiation message sent by a communication opposite device and recording a port for receiving the PTP main port negotiation message;
according to a same determination rule preset in a local device and the communication opposite device, selecting one port from a port corresponding to a main line of the local device and the port for receiving the PTP main port negotiation message as a subsequent PTP main physical link port; and
performing a PTP time synchronization using the PTP main physical link port.

Alternatively, the PTP main port negotiation message carries a clock identification CLOCKID of the communication opposite device and a current negotiation mode, and the determination rule includes:
when the CLOCKID of the local device is greater than the CLOCKID of the communication opposite device, selecting the port for receiving the PTP main port negotiation message as the subsequent PTP main physical link port; and
when the CLOCKID of the local device is smaller than the CLOCKID of the communication opposite device, selecting the port corresponding to the main line of the local device as the subsequent PTP main physical link port.

Alternatively, the method further includes:
at the time of initialization, according to a result of a LACP protocol, selecting one of active aggregation member ports as an initial PTP main physical link port; and
triggering a response mode to send the PTP main port negotiation message to the communication opposite device through the initial PTP main physical link port, the PTP main port negotiation message carrying a CLOCKID of the local device and a current negotiation mode, and the response mode lasting for a first time length.

Alternatively, the method further includes:
when a current state of the PTP main physical link port becomes unavailable, re-selecting one of remaining active aggregation member ports which work normally as the subsequent PTP main physical link port; and
triggering a response mode to send the PTP main port negotiation message through the re-selected PTP main physical link port.

Alternatively, in the case that the local device is in a response mode when receiving the PTP main port negotiation message sent by the communication opposite device, after the step of receiving the PTP main port negotiation message sent by the communication opposite device, the method further includes:

triggering a keep-alive mode and sending a PTP main port negotiation message to the communication opposite device in the keep-alive mode, the PTP main port negotiation message carrying a CLOCKID of the local device and a current negotiation mode.

Alternatively, the method further includes:
configuring a same determination rule in devices that communicate with each other.

The embodiments of the present invention further provide a precision time protocol time synchronization apparatus in an aggregation network, including:
a negotiation message receiving module configured to receive a PTP main port negotiation message sent by a communication opposite device and record a port for receiving the PTP main port negotiation message;
a port determination module configured to, according to a same determination rule preset in a local device and the communication opposite device, select one port from a port corresponding to a main line of the local device and the port for receiving the PTP main port negotiation message as a subsequent PTP main physical link port; and
a PTP synchronization module configured to perform a PTP time synchronization using the PTP main physical link port.

Alternatively, the PTP main port negotiation message carries a CLOCKID of the communication opposite device and a current negotiation mode, the determination rule includes: when the CLOCKID of the local device is greater than the CLOCKID of the communication opposite device, selecting the port for receiving the PTP main port negotiation message as the subsequent PTP main physical link port; and when the CLOCKID of the local device is smaller than the CLOCKID of the communication opposite device, selecting the port corresponding to the main line of the local device as the subsequent PTP main physical link port, and the apparatus further includes: a mode management module;
the port determination module is further configured to, at the time of initialization, select one of active aggregation member ports as an initial PTP main physical link port according to a result of a LACP protocol, and
the mode management module is configured to trigger a response mode to send a PTP main port negotiation message to the communication opposite device through the initial PTP main physical link port, the PTP main port negotiation message carrying a CLOCKID of the local device and a current negotiation mode, and the response mode lasting for a first time length.

Alternatively, the port determination module is further configured to, when a current state of the PTP main physical link port becomes unavailable, re-select one of remaining active aggregation member ports which work normally as the subsequent PTP main physical link port; and
the mode management module is further configured to trigger a response mode to send the PTP main port negotiation message through the re-selected PTP main physical link port.

The embodiments of the present invention further provide a precision time protocol time synchronization system in an aggregation network, including: a first device and a second device, and the first device and the second device being communicating with each other;
wherein the first device is configured to receive a PTP main port negotiation message sent by the second device and record a port for receiving the PTP main port negotiation message, according to a same determination rule preset in a local device and a communication opposite device, select one port from a port corresponding to a local main line and the port for receiving the PTP main port negotiation message as a subsequent PTP main physical link port, and perform a PTP time synchronization using the PTP main physical link port.

Alternatively, the first device is further configured to, at the time of initialization, according to a result of a LACP protocol, select one of active aggregation member ports as an initial PTP main physical link port, and trigger a response mode to send the PTP main port negotiation message to the communication opposite device through the initial PTP main physical link port, the PTP main port negotiation message carrying a CLOCKID of the local device and a current negotiation mode, and the response mode lasting for a first time length.

Alternatively, the first device is further configured to, when a current state of the PTP main physical link port becomes unavailable, re-select one of remaining active aggregation member ports which work normally as the subsequent PTP main physical link port; and trigger a response mode to send the PTP main port negotiation message through the re-selected PTP main physical link port.

Alternatively, the first device is further configured to trigger a keep-alive mode and send the PTP main port negotiation message to the second device in the keep-alive mode, the PTP main port negotiation message carrying a CLOCKID of the local device and a current negotiation mode.

The embodiments of the present invention further provide a computer-readable storage medium storing computer-executable instructions for performing the above-mentioned precision time protocol time synchronization method in an aggregation network.

The present invention provides a PTP time synchronization method, apparatus, system in an aggregation network, in which a PTP main port negotiation message sent by a communication opposite device is received, and a port for receiving the PTP main port negotiation message is recorded; according to a same determination rule preset in a local device and the communication opposite device, one port is selected from a port corresponding to a main line of the local device and the port for receiving the PTP main port negotiation message as a subsequent PTP main physical link port; and then a PTP time synchronization is performed using the PTP main physical link port. In this way, it is realized that the devices determine the link used by the same PTP time synchronization by automatic negotiation, and the problem of conflict between the PTP and the LACP is solved.

Other aspects may be understood after reading and understanding the drawings and the detailed description.

### BRIEF DESCRIPTION OF THE DRAWINGS

Fig. 1 is a flow chart of a precision time protocol time synchronization method in an aggregation network provided by a first embodiment of the present invention;
Fig. 2 is a schematic diagram of a scene for triggering a PTP main physical link port provided by the first embodiment of the present invention;
Fig. 3 is a schematic diagram of a PTP main port negotiation message in the first embodiment of the present invention;
Fig. 4 is a schematic diagram of the principle of selecting and switching the PTP main physical link port in the first embodiment of the present invention; and
Fig. 5 is a schematic diagram of a precision time protocol time synchronization apparatus in an aggregation network provided by a second embodiment of the present invention.

### DETAILED DESCRIPTION

In the IEEE 1588 V2 protocol, the time calculations are derived based on a single link, that limits that the network deployed under the IEEE 1588 V2 protocol can only be the network composed of a single link. However, in order to increase the link transmission capacity, operators usually adopt multiple links for sharing services. At this time, the link aggregation control protocol (LACP) is used. The lines on which the message is transmitted and received in one section of the aggregation link designed in accordance with the LACP protocol are not necessarily limited to one interface, that results in conflict between the PTP and the LACP. How to deploy the PTP in the network of the LACP protocol becomes a serious problem.

In view of the above problem, the present invention provides a PTP time synchronization method, apparatus and system in an aggregation network. Hereinafter, the embodiments of the present invention will be described in detail with reference to the accompanying drawings. It is to be noted that the embodiments and the features in the embodiments in the present application may be combined with each other if there is no conflict.

First, a first embodiment of the present invention will be described with reference to the accompanying drawings.

The present invention provides a precision time protocol time synchronization method in an aggregation network, which extends the PTP to achieve the negotiation and selection of a PTP main physical link used by a PTP message. The PTP main physical link is a member link of link aggregation dedicated to the PTP. Then, a device recognizes the PTP message from the message flow and controls the PTP message to be sent or forwarded on the PTP main physical port.

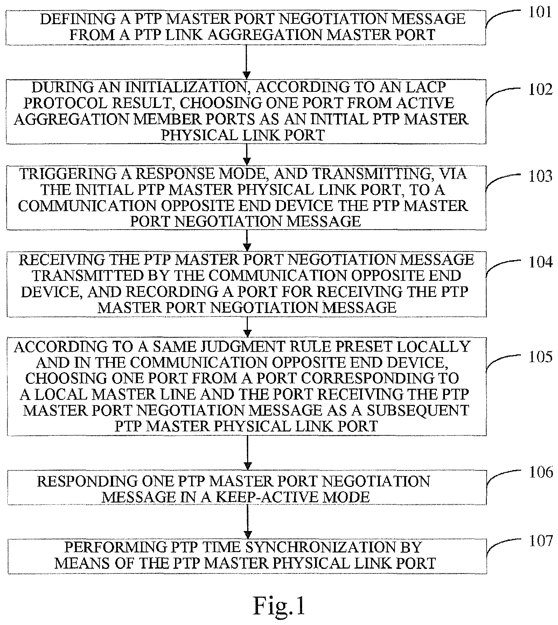

An implementation method of the embodiment of the present invention is shown in Fig. 1, which includes the following steps.

In step 101, a PTP main port negotiation message of a link aggregation main port of a PTP is defined. The contents of the message include a CLOCKID (different devices have different CLOCKIDs) and a negotiation mode of a host device. The negotiation mode includes a response mode and a keep-alive mode.

In step 102, at the time of initialization, one of active aggregation member ports is selected as an initial PTP main physical link port according to a result of the LACP.

When a PTP port is bound to a link aggregation port, one PTP main physical link port is first selected from the active aggregation member ports by observing the result of the LACP protocol, and the state change of the member port of the LACP is sensed in real time. When the selected main physical link interface becomes unavailable, an available interface is re-selected.

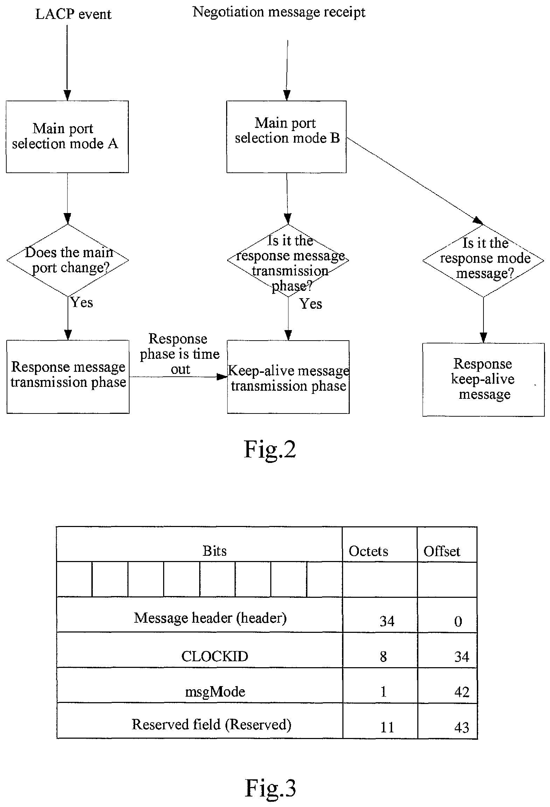

As shown in Fig. 2, the negotiation and selection process of the PTP main physical link involved by the embodiments of the present invention has the following two triggering scenes.

One scene is the PTP main physical link port selection process A, which is triggered by the LACP change. In this process, it is needed to re-select the PTP main physical link port, and to trigger a response message transmission phase for fast message transmission.

The other scene is the PTP main physical link port selection process B, which is triggered by receipt of a negotiation message. In this process, it is needed to re-select the main physical link port, and when it is detected that the original phase is the response message transmission phase, the phase is switched to a keep-alive message transmission phase. By default, the time of the response message transmission phase may be designed as 30s, and a message transmission interval is 1s. The message transmission interval in the keep-alive message transmission phase is 1 minute. Steps 103 through 105 may be referred to for details.

In step 103, a response mode is triggered, and a PTP main port negotiation message is transmitted to a communication opposite device through the initial PTP main physical link port, the PTP main port negotiation message carrying a CLOCKID of the local device and a current negotiation mode, and the response mode lasting for a first time length.

After the PTP main physical link port is triggered in step 102, it is needed to trigger the response mode for sending the PTP negotiation message quickly (that is, transmitted in a relative high frequency), the duration time is T1, and the transmission is repeated several times within T1. After receiving the negotiation message from the opposite device, the response mode for quick transmission is exited, and the keep-alive mode for slow message notification is entered. When there is no response for the message in the response mode, after the T1 is ended, the mode is automatically switched to the slow keep-alive mode, and the PTP negotiation message is continued to be sent at a relative low frequency. If the communication opposite device always responds to the message, the local device selects the PTP main physical link port by itself.

The following is a specific implementation of the PTP main port negotiation message:
message encapsulation: using two-layer multicast message encapsulation;
message destination mac: using a destination mac of P2P message (01 80 c2 00 00 0E);
protocol number: 0x88F7;
message type: 0xE (representative of ptp negotiation message).

The content of the PTP main port negotiation message is shown in Fig. 3, the content of CLOCKID is the host device's ID; msgMode (negotiation mode) value is 1, and a value of the keep-alive mode is 0. Other fields may be referred to the standard protocol.

In step 104, a PTP main port negotiation message sent from the communication opposite device is received, and a port for receiving the PTP main port negotiation message is recorded.

After receiving the PTP main interface negotiation message from the opposite device, the PTP main physical link port selection process is entered.

After the step of receiving the PTP main port negotiation message sent from the communication opposite device, the keep-alive mode is triggered, and a PTP main port negotiation protocol is sent to the communication opposite device in the keep-alive mode, the PTP main port negotiation message carrying the CLOCKID of the local device and the current negotiation mode.

The PTP main port negotiation message carries the CLOCKID and the current negotiation mode of the communication opposite device and the current negotiation mode, and the same determination rule is arranged in the devices which are communicating with each other. The determination rule is particularly as follows:
when the CLOCKID of the local device is greater than the CLOCKID of the communication opposite device, the port for receiving the PTP main port negotiation message is selected as the subsequent PTP main physical link port; and
when the CLOCKID of the local device is smaller than the CLOCKID of the communication opposite device, the port corresponding to the local main line is selected as the subsequent PTP main physical link port.

In step 105, based on the same determination rule preset in the local device and the communication opposite device, one port is selected from the port corresponding to the local main line and the port receiving the PTP main port negotiation message as a subsequent PTP main physical link port.

This step may be done by comparing the CLOCKIDs. For example, the port used by the device with a small CLOCKID is selected to be the PTP main physical link port (it is also possible to make a selection depending on the device with a large CLOCKID. Regardless how to configure the rule for selecting the PTP main physical link port, as long as the rules between the devices are the same, the effect of selecting the same port by the devices communicating with each other can be achieved. The embodiments of the present invention are not limited thereto).

In step 106, after receiving the PTP main port negotiation message of the response mode, one PTP main port negotiation message of the keep-alive mode is answered.

In step 107, PTP time synchronization is performed by using the PTP main physical link port.

The device controls the PTP messages to be sent or forwarded from the PTP main physical link port. And then the same link requirement is completed in cooperation with the clock protocol.

When an interface state of the current PTP main physical link becomes unavailable, one of the remaining active PTP active physical link ports which work normally is re-selected as the subsequent PTP main physical link port.

The response mode is triggered, and the PTP main port negotiation message is sent through the re-selected PTP main physical link port.

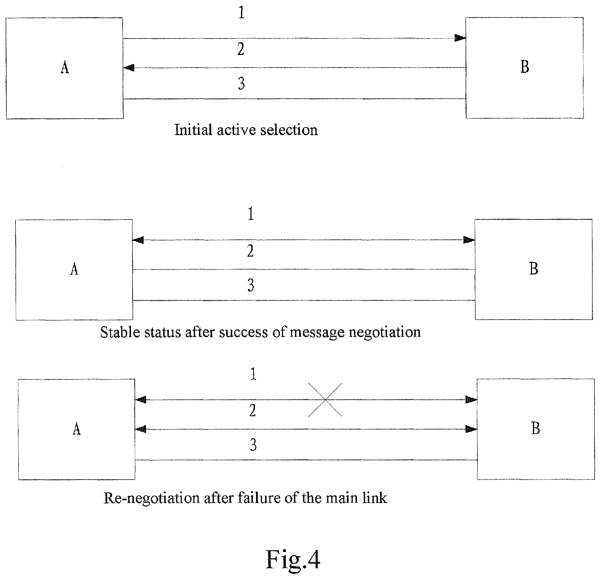

The selection and switching principle of the PTP main physical link port is shown in Fig. 4. In the initial active selection phase: the protocol queries LACP information to determine a main port, where the main port selected by a device A is a line 1, and the main port selected by a device B is line 2. Then, the device will enter the response message transmission phase.

When the device A sends a negotiation message through the line 1 to the device B, after the device B receives the negotiation message from the device A, the device B records the port 1 for receiving the message, and compares CLOCKIDs of the devices A and B. If it is found that the CLOCKID of the device A is smaller, then the port of the line 1 selected by the device A is switched to. At this point, the negotiation is completed, and a stable keep-alive state is entered.

When the selected main port becomes unavailable due to external reasons (for example, a fiber is pulled out), the above-mentioned two selection phases will be re-entered. When the negotiation is stable, the line 2 is selected as the active link.

Hereinafter, a second embodiment of the present invention will be described with reference to the accompanying drawings.

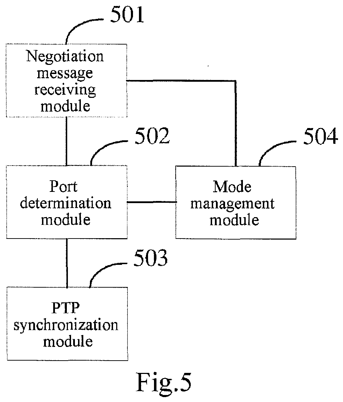

The embodiment of the present invention provides a precision time protocol time synchronization apparatus in an aggregation network, and the apparatus includes a processor and a program storage device. The structure of the apparatus is shown in Fig. 5, and includes: a negotiation message receiving module 501, a port determination module 502, a PTP synchronization module 503, and a mode management module 504.

The negotiation message receiving module 501 is configured to receive a PTP main port negotiation message sent by a communication opposite device and record a port for receiving the PTP main port negotiation message.

The port determination module 502 is configured to, according to a same determination rule preset in a local device and the communication opposite device, select one port from a port corresponding to a main line of the local device and the port for receiving the PTP main port negotiation message as a subsequent PTP main physical link port.

The PTP synchronization module 503 is configured to perform a PTP time synchronization using the PTP main physical link port.

In an embodiment, the PTP main port negotiation message carries a CLOCKID of the communication opposite device and a current negotiation mode, the determination rule includes: when the CLOCKID of the local device is greater than the CLOCKED of the communication opposite device, selecting the port for receiving the PTP main port negotiation message as the subsequent PTP main physical link port; and when the CLOCKID of the local device is smaller than the CLOCKID of the communication opposite device, selecting the port corresponding to the local main line as the subsequent PTP main physical link port, and the apparatus further includes: a mode management module 504.

The port determination module 502 is further configured to, at the time of initialization, select one of active aggregation member ports as an initial PTP main physical link port according to a result of a LACP protocol.

The mode management module 504 is configured to trigger a response mode to send a PTP main port negotiation message to the communication opposite device through the initial PTP main physical link port, the PTP main port negotiation message carrying a CLOCKID of the local device and a current negotiation mode, and the response mode lasting for a first time length.

The port determination module 502 is further configured to, when a current state of the PTP main physical link interface becomes unavailable, re-select one of remaining active aggregation member ports which work normally as the subsequent PTP main physical link port.

The mode management module 504 is further configured to trigger a response mode to send the PTP main port negotiation message through the re-selected PTP main physical link port.

The above-mentioned precision time protocol time synchronization apparatus in an aggregation network may be integrated in the network communication equipment, and its corresponding functions are completed by the network communication equipment.

The embodiments of the present invention also provides a precision time protocol time synchronization system in an aggregation network, including: a first device and a second device, wherein the first device and the second device communicate with each other and both of them are integrated with the precision time protocol time synchronization system in an aggregation network as shown in Fig. 5.

The first device is adapted to receive a PTP main port negotiation message sent by the second device and record a port for receiving the PTP main port negotiation message, according to a same determination rule preset in a local device and a communication opposite device, select one port from a port corresponding to a local main line and the port for receiving the PTP main port negotiation message as a subsequent PTP main physical link port, and perform a PTP time synchronization using the PTP main physical link port.

In an embodiment, the first device is further adapted to, at the time of initialization, according to a result of a LACP protocol, select one of active aggregation member ports as an initial PTP main physical link port, and trigger a response mode to send a PTP main port negotiation message to the communication opposite device through the initial PTP main physical link port, the PTP main port negotiation message carrying a CLOCKID of the local device and a current negotiation mode, and the response mode lasting for a first time length.

In an embodiment, the first device is further adapted to, when a current state of the PTP main physical link interface becomes unavailable, re-select one of remaining active aggregation member ports which work normally as the subsequent PTP main physical link port; and trigger a response mode to send the PTP main port negotiation message through the re-selected PTP main physical link port.

In an embodiment, the first device is further adapted to trigger a keep-alive mode and send the PTP main port negotiation message to the second device in the keep-alive mode, the PTP main port negotiation message carrying a CLOCKID of the local device and a current negotiation mode.

The precision time protocol time synchronization apparatus and system in an aggregation network provided by the embodiments of the present invention can be combined with the precision time protocol time synchronization method in an aggregation network provided by the embodiments of the present invention, the device receives a PTP main port negotiation message sent by a communication opposite device and records a port for receiving the PTP main port negotiation message; according to a same determination rule preset in a local device and the communication opposite device, one port is selected from a port corresponding to a main line of the local device and the port for receiving the PTP main port negotiation message as a subsequent PTP main physical link port; and then a PTP time synchronization is performed using the PTP main physical link port. In this way, it is realized that the devices determine the link used by the same PTP time synchronization by automatic negotiation, and the problem of conflict between the PTP and the LACP is solved. The technical solutions provided by the embodiments of the present invention propose a concept of PTP main physical link, and can automatically negotiate and select this link by extending the protocol, so as to solve the application problem of the PTP technique in the link aggregation network.

It will be understood by those skilled in the art that all or a portion of the steps of the embodiments described above may be implemented using flows of a computer program that may be stored in a computer readable storage medium and be executed on a corresponding hardware platform (such as a system, equipment, an apparatus, and a device). When being executed, one of the steps or a combination of the steps in the method embodiment is included.

Alternatively, all or a portion of the steps of the embodiments described above may also be implemented using an integrated circuit. These steps may be implemented by being separately made into individual integrated circuit modules, or making a plurality of modules or steps into a single integrated circuit module.

The devices/functional modules/functional units in the above embodiments may be implemented using a general purpose computing device, which may be embodied on a single computing device or may be distributed over a network consisting of a plurality of computing devices.

The devices/functional modules/functional units in the above embodiments may be stored in a computer-readable storage medium when being implemented in the form of software function modules and sold or used as a stand-alone product. The above-mentioned computer-readable storage medium may be a read-only memory, a disk or an optical disk.

Modifications and replacements which may be easily conceived of by those skilled in the art within the technical scope disclosed by the present invention shall fall within the protection scope of the present invention. Therefore, the protection scope of the present invention shall be based on the protection scope of the claims.

### Industrial Applicability

Through the precision time protocol time synchronization method, apparatus, system in an aggregation network provided by the embodiments of the present invention, a precision time protocol PTP main port negotiation message sent by a communication opposite device is received, and a port for receiving the PTP main port negotiation message is recorded; according to a same determination rule preset in a local device and the communication opposite device, one port is selected from a port corresponding to a main line of the local device and the port for receiving the PTP main port negotiation message as a subsequent PTP main physical link port; and then a PTP time synchronization is performed using the PTP main physical link port. In this way, it is realized that the devices determine the link used by the same PTP time synchronization by automatic negotiation, and the problem of conflict between the PTP and the LACP is solved.

## Claims

1. A precision time protocol time synchronization method in an aggregation network, comprising:
receiving a precision time protocol PTP main port negotiation message sent by a communication opposite device and recording a port for receiving the PTP main port negotiation message;
according to a same determination rule preset in a local device and the communication opposite device, selecting one port from a port corresponding to a main line of the local device and the port for receiving the PTP main port negotiation message as a subsequent PTP main physical link port; and
performing a PTP time synchronization using the PTP main physical link port.

2. The method of claim 1, wherein the PTP main port negotiation message carries a clock identification CLOCKID of the communication opposite device and a current negotiation mode, and the determination rule comprises:
when the CLOCKID of the local device is greater than the CLOCKID of the communication opposite device, selecting the port for receiving the PTP main port negotiation message as the subsequent PTP main physical link port; and
when the CLOCKID of the local device is smaller than the CLOCKID of the communication opposite device, selecting the port corresponding to the main line of the local device as the subsequent PTP main physical link port.

3. The method of claim 1, further comprising:
in time of initialization, according to a result of a LACP protocol, selecting one of active aggregation member ports as an initial PTP main physical link port; and
triggering a response mode to send the PTP main port negotiation message to the communication opposite device through the initial PTP main physical link port, the PTP main port negotiation message carrying a CLOCKED of the local device and a current negotiation mode, and the response mode lasting for a first time length.

4. The method of claim 1 or 3, further comprising:
when a current state of the PTP main physical link port becomes unavailable, re-selecting one of remaining active aggregation member ports which work normally as the subsequent PTP main physical link port; and
triggering a response mode to send the PTP main port negotiation message through the re-selected PTP main physical link port.

5. The method of claim 1, wherein in the case that the local device is in a response mode when receiving the PTP main port negotiation message sent by the communication opposite device, after the step of receiving the PTP main port negotiation message sent by the communication opposite device, the method further comprises:
triggering a keep-alive mode and sending a PTP main port negotiation message to the communication opposite device in the keep-alive mode, the PTP main port negotiation message carrying a CLOCKID of the local device and a current negotiation mode.

6. The method of claim 1, further comprising:
configuring a same determination rule in devices that communicate with each other.

7. A precision time protocol time synchronization apparatus in an aggregation network, comprising:
a negotiation message receiving module configured to receive a PTP main port negotiation message sent by a communication opposite device and record a port for receiving the PTP main port negotiation message;
a port determination module configured to, according to a same determination rule preset in a local device and the communication opposite device, select one port from a port corresponding to a main line of the local device and the port for receiving the PTP main port negotiation message as a subsequent PTP main physical link port; and
a PTP synchronization module configured to perform a PTP time synchronization using the PTP main physical link port.

8. The apparatus of claim 7, wherein the PTP main port negotiation message carries a CLOCKID of the communication opposite device and a current negotiation mode, the determination rule comprises: when the CLOCKID of the local device is greater than the CLOCKID of the communication opposite device, selecting the port for receiving the PTP main port negotiation message as the subsequent PTP main physical link port; and when the CLOCKID of the local device is smaller than the CLOCKID of the communication opposite device, selecting the port corresponding to the main line of the local device as the subsequent PTP main physical link port, and the apparatus further comprises: a mode management module;
the port determination module is further configured to, at the time of initialization, select one of active aggregation member ports as an initial PTP main physical link port according to a result of a LACP protocol, and
the mode management module is configured to trigger a response mode to send a PTP main port negotiation message to the communication opposite device through the initial PTP main physical link port, the PTP main port negotiation message carrying a CLOCKID of the local device and a current negotiation mode, and the response mode lasting for a first time length.

9. The apparatus of claim 7 or 8, wherein
the port determination module is further configured to, when a current state of the PTP main physical link port becomes unavailable, re-select one of remaining active aggregation member ports which work normally as the subsequent PTP main physical link port; and
the mode management module is further configured to trigger a response mode to send the PTP main port negotiation message through the re-selected PTP main physical link port.

10. A precision time protocol time synchronization system in an aggregation network, comprising: a first device and a second device, and the first device and the second device being communicating with each other;
wherein the first device is configured to receive a PTP main port negotiation message sent by the second device and record a port for receiving the PTP main port negotiation message, according to a same determination rule preset in a local device and a communication opposite device, select one port from a port corresponding to a local main line and the port for receiving the PTP main port negotiation message as a subsequent PTP main physical link port, and perform a PTP time synchronization using the PTP main physical link port.

11. The system of claim 10, wherein
the first device is further configured to, at the time of initialization, according to a result of a LACP protocol, select one of active aggregation member ports as an initial PTP main physical link port, and trigger a response mode to send the PTP main port negotiation message to the communication opposite device through the initial PTP main physical link port, the PTP main port negotiation message carrying a CLOCKID of the local device and a current negotiation mode, and the response mode lasting for a first time length.

12. The system of claim 10, wherein
the first device is further configured to, when a current state of the PTP main physical link port becomes unavailable, re-select one of remaining active aggregation member ports which work normally as the subsequent PTP main physical link port; and trigger a response mode to send the PTP main port negotiation message through the re-selected PTP main physical link port.

13. The system of claim 10, wherein
the first device is further configured to trigger a keep-alive mode and send the PTP main port negotiation message to the second device in the keep-alive mode, the PTP main port negotiation message carrying a CLOCKID of the local device and a current negotiation mode.

14. A computer-readable storage medium storing computer-executable instructions for performing the method of any one of claims 1-6.
